(19) Europäisches Patentamt
European Patent Office
Office européen des brevets

(11) **EP 3 920 000 A1**

(12) **EUROPEAN PATENT APPLICATION**
published in accordance with Art. 153(4) EPC

(43) Date of publication:
**08.12.2021 Bulletin 2021/49**

(51) Int Cl.:
**G05D 1/02** (2020.01)      **G05B 13/02** (2006.01)
**G05B 19/4155** (2006.01)      **B25J 9/10** (2006.01)
**B25J 13/00** (2006.01)

(21) Application number: **19912836.4**

(22) Date of filing: **30.01.2019**

(86) International application number:
**PCT/JP2019/003188**

(87) International publication number:
**WO 2020/157863 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NEC Corporation**
**108-8001 Tokyo (JP)**

(72) Inventors:
• **OYAMA, Hiroyuki**
**Tokyo 108-8001 (JP)**
• **ITOU, Takehiro**
**Tokyo 108-8001 (JP)**

(74) Representative: **Betten & Resch**
**Patent- und Rechtsanwälte PartGmbB**
**Maximiliansplatz 14**
**80333 München (DE)**

(54) **CONTROL DEVICE, CONTROL METHOD, AND RECORDING MEDIUM**

(57)      A control device includes a machine learning unit that performs machine learning of control for an operation of a control target device, an avoidance command value calculation unit that obtains an avoidance command value that is a control command value for the control target device, the control command value which satisfies constraint conditions including a condition for the control target device not to come into contact with an obstacle, and the control command value that an evaluation value obtained by applying the control command value to an evaluation function satisfies a prescribed end condition, and a device control unit that controls the control target device on the basis of the avoidance command value, in which a parameter value obtained through the machine learning in the machine learning unit is reflected in at least one of the evaluation function and the constraint condition.

FIG. 3

**Description**

TECHNICAL FIELD

The present invention relates to a control device, a control method, and a recording medium.

BACKGROUND ART

Technology for avoiding a control target device coming into contact with an obstacle in a case of performing reinforcement learning of an operation of the control target device has been proposed.

For example, in a reinforcement learning device disclosed in Patent Document 1, a force vector of a sum of a control parameter value calculated by control parameter value calculation means for performing reinforcement learning and a virtual external force calculated by virtual external force generator is output to a control target. The virtual external force generator sets a direction of the virtual external force to a direction perpendicular to a surface of an obstacle, and calculates the magnitude of the virtual external force to be reduced in proportion to the cube of the distance between the control target and the obstacle.

[Prior Art Documents]

[Patent Documents]

[Patent Document 1] Japanese Unexamined Patent Application, First Publication No. 2012-208789

SUMMARY OF THE INVENTION

Problem to be Solved by the Invention

An operation of a control target device for avoiding contact with an obstacle may be a hindrance factor in relation to an operation for achieving a target set for the control target device. Thus, it is preferable to reduce the influence of the operation of the control target device for avoiding contact with an obstacle as much as possible. If a result of determination of whether or not a control target device will come into contact with an obstacle can be reflected in a control command value, even in a case where the control target device and the obstacle are relatively close to each other, it can be expected that the influence of the operation of the control target device for avoiding contact with the obstacle will be made relatively small or eliminated.

An example object of the present invention is to provide a control device, a control method, and a recording medium capable of solving the above problems.

Means for Solving the Problem

According to a first example aspect of the present invention, there is provided a control device including a machine learning unit that performs machine learning of control for an operation of a control target device; an avoidance command value calculation unit that obtains an avoidance command value that is a control command value for the control target device, the control command value which satisfies constraint conditions including a condition for the control target device not to come into contact with an obstacle, and the control command value that an evaluation value obtained by applying the control command value to an evaluation function satisfies a prescribed end condition; and a device control unit that controls the control target device on the basis of the avoidance command value, in which a parameter value obtained through the machine learning in the machine learning unit is reflected in at least one of the evaluation function and the constraint condition.

According to a second example aspect of the present invention, there is provided a control method including a step of performing machine learning of control for an operation of a control target device; a step of obtaining an avoidance command value that is a control command value for the control target device, the control command value which satisfies constraint conditions including a condition for the control target device not to come into contact with an obstacle, and the control command value that an evaluation value obtained by applying the control command value to an evaluation function satisfies a prescribed end condition; and a step of controlling the control target device on the basis of the avoidance command value, in which a parameter value obtained through the machine learning in the step of performing machine learning is reflected in at least one of the evaluation function and the constraint condition.

According to a third example aspect of the present invention, there is provided a recording medium recording a program causing a computer to execute a step of performing machine learning of control for an operation of a control target device; a step of obtaining an avoidance command value that is a control command value for the control target device, the control command value which satisfies constraint conditions including a condition for the control target device not to come into contact with an obstacle, and the control command value that an evaluation value obtained by applying the control command value to an evaluation function satisfies a prescribed end condition; and a step of controlling the control target device on the basis of the avoidance command value, in which a parameter value obtained through the machine learning in the step of performing machine learning is reflected in at least one of the evaluation function and the constraint condition.

Effect of the Invention

According to the control device, the control method, and the recording medium, it is possible to reflect a result of determination of whether or not a control target device will come into contact with an obstacle in a control command value.

BRIEF DESCRIPTION OF THE DRAWINGS

FIG. 1 is a schematic configuration diagram illustrating an example of a device configuration of a control system according to a first example embodiment.
FIG. 2 is a schematic block diagram illustrating an example of a functional configuration of a reward value calculation device according to the first example embodiment.
FIG. 3 is a schematic block diagram illustrating an example of a functional configuration of a control device according to the first example embodiment.
FIG. 4 is a diagram illustrating an example of a flow of data in the control system according to the first example embodiment.
FIG. 5 is a flowchart illustrating an example of a processing procedure in which the control device according to the first example embodiment acquires a control command value for a control target device.
FIG. 6 is a diagram illustrating an example of a processing procedure in which a machine learning unit according to the first example embodiment performs machine learning of control for a control target device.
FIG. 7 is a schematic block diagram illustrating an example of a functional configuration of a control device according to a second example embodiment.
FIG. 8 is a diagram illustrating an example of a flow of data in a control system according to the second example embodiment.
FIG. 9 is a diagram illustrating an example of a configuration of a control device according to a third example embodiment.
FIG. 10 is a diagram illustrating an example of a processing procedure in a control method according to a fourth example embodiment.
FIG. 11 is a schematic block diagram illustrating a configuration of a computer according to at least one of the example embodiments.

EXAMPLE EMBODIMENT

Hereinafter, example embodiments of the present invention will be described, but the following example embodiments do not limit the inventions related to the claims. All combinations of the features described in the example embodiments are not essential to solving means of the inventions.

<First example embodiment>

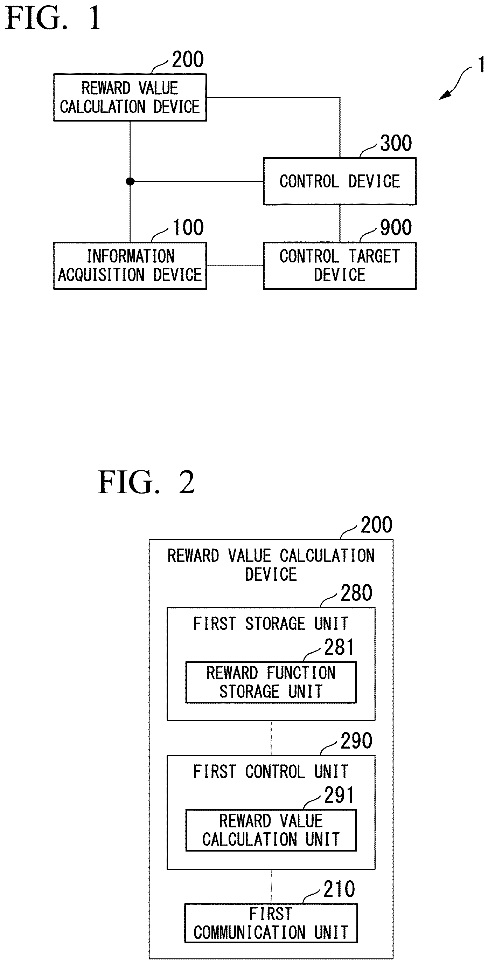

FIG. 1 is a schematic configuration diagram illustrating an example of a device configuration of a control system according to a first example embodiment. In the configuration illustrated in FIG. 1, a control system 1 includes an information acquisition device 100, a reward value calculation device 200, and a control device 300.
The control system 1 controls a control target device 900. The control system 1 causes the control target device 900 to perform a desired operation and controls the control target device 900 such that the control target device 900 does not come into contact with an obstacle.
The desired operation mentioned here is an operation for achieving a target set for the control target device 900. The term "contact" mentioned here is not limited to mere contact and also includes collision. The control target device 900 coming into contact with an obstacle refers to at least a part of the control target device 900 coming into contact with at least a part of the obstacle.

Hereinafter, as an example, a case where the control target device 900 is a vertical articulated robot will be described, but a control target of the control system 1 may be various devices that are operated according to control command values and may possibly come into contact with obstacles. For example, the control target device 900 may be an industrial robot in addition to a vertical articulated robot.

Alternatively, the control target device 900 may be a robot other than an industrial robot, such as a building robot or a housework robot. Various robots that are not limited to a specific application and change in shape may be used as an example of the control target device 900.

Alternatively, the control target device 900 may be moving objects such as automated guided vehicles or drones. The control target device 900 may be a device that autonomously operates as long as the device can be controlled by using control command values.

The obstacle mentioned here is an object with which the control target device 900 may possibly come into contact. The obstacle is not limited to a specific type of object. For example, the obstacle may be a human being, another robot, a surrounding wall or machine, temporarily placed baggage, or a combination thereof.

The control target device 900 itself may be treated as an obstacle. For example, in a case where control target device 900 is a vertical articulated robot, and a robot arm and a pedestal unit come into contact with each other depending on a posture thereof, the control system 1 treats the control target device 900 as an obstacle, and thus the robot arm and the pedestal unit coming into contact with each other can be avoided.

The information acquisition device 100 acquires sensing data from a sensor that observes the control target device 900, such as a sensor provided in the control target device 900, and detects a position and an operation of the control target device 900. The sensor from which the information acquisition device 100 acquires the sensing data is not limited to a specific type of sensor. For example, the information acquisition device 100 may acquire information such as any of a joint angle, a joint angular velocity, a joint velocity, and a joint acceleration of each joint of the control target device 900, or a combination thereof, from the sensing data.

The information acquisition device 100 generates and transmits position information of the control target device 900 and information indicating motion of the control target device 900 on the basis of the obtained information.

The information acquisition device 100 may transmit the position information of the control target device 900 as voxel data. For example, since the information acquisition device 100 transmits position information of a surface of the control target device 900 as voxel data, the control device 300 can ascertain a positional relationship between not one point but the surface of the control target device 900 and an obstacle and can thus ascertain the distance between the control target device 900 and the obstacle more accurately. The distance between the control target device 900 and the obstacle can be ascertained more accurately, and thus the control device 300 can perform control for causing the control target device 900 to avoid the obstacle with higher accuracy. Alternatively, the information acquisition device 100 may transmit coordinates of a representative point set in the control target device 900 as position information of the control target device 900.

The information acquisition device 100 transmits, for example, a velocity, an acceleration, an angular velocity, or an angular acceleration of the control target device 900, or a combination thereof as the information indicating motion of the control target device 900. The information acquisition device 100 may transmit information indicating motion of the entire control target device 900 as voxel data. Alternatively, the information acquisition device 100 may transmit data indicating motion of the representative point of the control target device 900. For example, the information acquisition device 100 may transmit a vector in which generalized coordinates q and generalized velocities q' of the control target device 900 are arrayed.

Alternatively, the information acquisition device 100 may transmit information indicating motion of an actuator of the control target device, such as an angular velocity of the joint of the control target device.

The position information of the control target device 900 and the information indicating motion of the control target device 900 are collectively referred to as state information of the control target device 900.

The information acquisition device 100 transmits the state information of the control target device to the reward value calculation device 200 and the control device 300.

The information acquisition device 100 specifies a position of an obstacle. The information acquisition device 100 may use various well-known methods as methods of estimating a position of an obstacle. For example, the control system 1 may include a camera capable of obtaining three-dimensional information, such as a depth camera or a stereo camera, and the information acquisition device 100 may acquire three-dimensional position information of an obstacle on the basis of an image from the camera. Alternatively, the control system 1 may include a device for obtaining three-dimensional information, such as a 3-dimensional light detection and ranging (3D-LiDAR) device, and the information acquisition device 100 may acquire three-dimensional position information of an obstacle on the basis of data measured by the device.

The information acquisition device 100 transmits the position information of the obstacle. The information acquisition device 100 may transmit the position information of the obstacle in a data format of voxel data. For example, when the information acquisition device 100 transmits position information of a surface of the obstacle as voxel data, the control device 300 can ascertain a positional relationship between not one point but the surface of the obstacle and the control target device 900 and can thus ascertain the distance between the control target device 900 and the obstacle more accurately. The distance between the control target device 900 and the obstacle can be ascertained more accurately, and thus the control device 300 can perform control for causing the control target device 900 to avoid the obstacle with higher accuracy. Alternatively, the information acquisition device 100 may transmit coordinates of the representative point set in the control target device 900 as position information of the control target device 900.

In a case where an obstacle moves, the information acquisition device 100 may transmit information indicating motion of the obstacle in addition to position information of the obstacle. The information acquisition device 100 transmits, for example, a velocity, an acceleration, an angular velocity, or an angular acceleration of the obstacle, or a combination thereof as the information indicating motion of the obstacle. The information acquisition device 100 may transmit information indicating motion of the entire obstacle as voxel data. Alternatively, the information acquisition device 100 may transmit data indicating motion of a representative point of the obstacle. For example, the information acquisition device 100 may transmit a vector in which generalized coordinates $q$ and generalized velocities $q'$ of the obstacle are arranged.

The position information of the obstacle or a combination of the position information of the obstacle and the information indicating motion of the obstacle in a case where the obstacle moves is referred to as state information of the obstacle.

The information acquisition device 100 transmits the state information of the obstacle to the control device 300.

The reward value calculation device 200 calculates a reward value. The reward value is used for the control device 300 to perform machine learning of control for the control target device 900. The reward value mentioned here is a numerical value indicating evaluation for a result of the control target device 900 being operated on the basis of a control command value from the control device 300. For example, the reward value calculation device 200 stores in advance a reward function to calculate a greater reward value as the degree of achievement of an objective set for the control target device 900 becomes higher with information indicating a position and an operation of the control target device 900 as input. The reward value calculation device 200 inputs information indicating a position and an operation of the control target device 900 acquired from the information acquisition device 100 to the reward function and thus calculates a reward value.

The control device 300 executes control for the control target device 900 in the control system 1. Therefore, as described above, in the control system 1, the control device 300 causes the control target device 900 to perform a desired operation and controls the control target device 900 such that it does not to come into contact with an obstacle. The control device 300 calculates a control command value for the control target device 900 on the basis of information transmitted from the information acquisition device 100, and controls the control target device 900 by transmitting the calculated control command value to the control target device 900.

The control device 300 performs machine learning of control for the control target device 900. The control device 300 performs machine learning of control for the control target device 900 such that a reward value calculated by the reward value calculation device 200 becomes greater.

FIG. 2 is a schematic block diagram illustrating an example of a functional configuration of the reward value calculation device 200. In the configuration illustrated in FIG. 2, the reward value calculation device 200 includes a first communication unit 210, a first storage unit 280, and a first control unit 290. The first storage unit 280 includes a reward function storage unit 281. The first control unit 290 includes a reward value calculation unit 291.

The first communication unit 210 performs communication with other devices. Particularly, the first communication unit 210 receives state information of the control target device 900 transmitted from the information acquisition device 100. The first communication unit 210 transmits a reward value calculated by the reward value calculation unit 291 to the control device 300.

The first storage unit 280 stores various data. The function of the first storage unit 280 is realized by using a storage device provided in the reward value calculation device 200.

The reward function storage unit 281 stores a reward function.

The first control unit 290 controls each unit of the reward value calculation device 200 such that various processes are executed. The function of the first control unit 290 is realized by a central processing unit (CPU) provided in the reward value calculation device 200 reading and executing a program stored in the first storage unit 280.

The reward value calculation unit 291 calculates a reward value. Specifically, the reward value calculation unit 291 inputs the state information of the control target device 900 received by the first communication unit 210 from the information acquisition device 100, into the reward function stored in the reward function storage unit 281 to calculate the reward value.

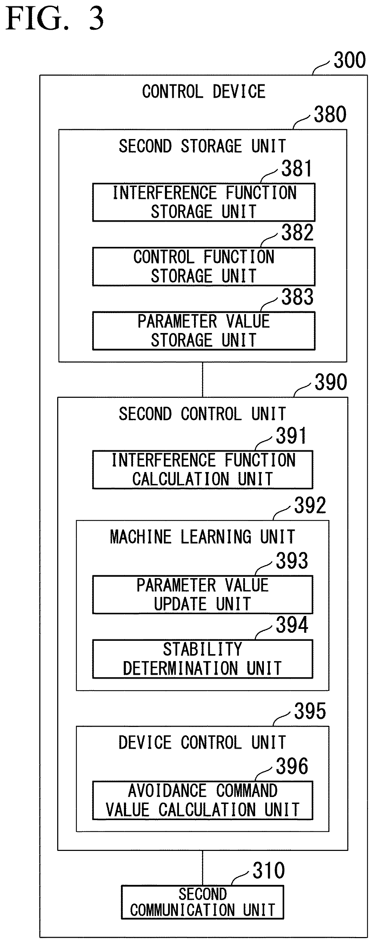

FIG. 3 is a schematic block diagram illustrating an example of a functional configuration of the control device 300. In the configuration illustrated in FIG. 3, the control device 300 includes a second communication unit 310, a second storage unit 380, and a second control unit 390. The second storage unit 380 includes an interference function storage unit 381, a control function storage unit 382, and a parameter value storage unit 383. The second control unit 390 includes an interference function calculation unit 391, a machine learning unit 392, and a device control unit 395. The machine learning unit 392 includes a parameter value update unit 393 and a stability determination unit 394. The device control unit 395 includes an avoidance command value calculation unit 396.

The second communication unit 310 performs communication with other devices. Particularly, the second communication unit 310 receives state information of the control target device 900 and state information of an obstacle transmitted from the information acquisition device 100. The first communication unit 210 transmits a reward value calculated by the reward value calculation unit 291 to the control device 300. The second communication unit 310 transmits a control command value calculated by the device control unit 395 to the control target device 900.

The second storage unit 380 stores various data. The function of the second storage unit 380 is executed by using a storage device provided in the control device 300.

The interference function storage unit 381 stores an interference function. The interference function is a function used to prevent the control target device 900 from coming into contact with an obstacle, and indicates a value corresponding to a positional relationship between the control target device 900 and the obstacle. An interference function B takes values as in the following Expression (1).

[Math. 1]

$$\begin{cases} B(x) > 0 : \text{Position of control target device is outside of obstacle} \\ B(x) = 0 : \text{Position of control target device is on surface of obstacle} \\ B(x) < 0 : \text{Position of control target device is inside of obstacle} \end{cases}$$

$$\cdots (1)$$

In Expression (1), x indicates state information of the control target device 900. For example, the information acquisition device 100 may transmit position information of a surface of the control target device 900 as voxel data, and the interference function calculation unit 391 may calculate the distance between the control target device 900 and an obstacle at a position where the control target device 900 and the obstacle are closest to each other by applying the state information of the control target device 900 to the interference function B.

Hereinafter, an interference function value $B(x)$ indicates the distance between a position of the control target device 900 indicated by the state information x of the control target device 900 and an obstacle. In a case where there are a plurality of obstacles, the interference function value $B(x)$ indicates the distance from an obstacle closest to the position of the control target device 900. Typically, the control target device 900 is not included in an obstacle, and thus the interference function value $B(x)$ in a case where the control target device 900 is located inside an obstacle need not be defined.

The interference function value $B(x)$ indicates whether or not the control target device 900 will come into contact with an obstacle, and the distance between the control target device 900 and the obstacle.

The control function storage unit 382 stores a control function. The control function mentioned here is a function for calculating a control command value for the control target device 900 such that an objective set for the control target device 900 is achieved. Hereinafter, as an example, a case where the control function storage unit 382 stores a Lyapunov function as the control function will be described. However, a method of the control device 300 controlling the control target device 900 is not limited to a control method using the Lyapunov function. As a method of the control device 300 controlling the control target device 900, various well-known control methods in which machine learning of a control parameter value is possible may be used.

The control parameter value mentioned here is a value of a parameter included in the control function. The control parameter value is reflected in a control command value calculated by the device control unit 395.

The parameter value storage unit 383 stores the control parameter value.

The second control unit 390 controls each unit of the control device 300 to execute various processes. The function of the second control unit 390 is realized by a CPU provided in the control device 300 reading and executing a program stored in the second storage unit 380.

The interference function calculation unit 391 calculates an interference function value. Specifically, the interference function calculation unit 391 generates an interference function on the basis of the position information of the obstacle, and stores the interference function into the interference function storage unit 381. The interference function calculation unit 391 calculates an interference function value by inputting the state information of the control target device 900 and the state information of the obstacle received by the first communication unit 210 from the information acquisition device 100 into the interference function stored in the interference function storage unit 381.

The interference function calculation unit 391 calculates a value indicating a temporal change in the interference function value.

In a case where the control target device 900 operates and thus a position of the control target device 900 temporally changes, the interference function value B(x) also temporally changes. In this case, the interference function calculation unit 391 calculates the amount of change in the interference function value B(x) between control steps as a value indicating the temporal change in the interference function value B(x).

The control steps here are a series of processing steps for the control device 300 to transmit a control command value once to the control target device 900. In other words, the control device 300 transmits a control command value to the control target device 900 in units of periodic control steps.

The interference function calculation unit 391 predicts an amount of change in the interference function value B(x) between the current control step and the next control step. The amount of change in the interference function value between the control steps is indicated by $\Delta B(x,u)$. Since the amount of change in the interference function value B(x) depends on a change in a position of the control target device 900, and a change in the position of the control target device 900 depends on a control command value u, the control command value u is explicitly shown.

The second storage unit 380 may store a dynamic model of the control target device 900 in advance in order for the interference function calculation unit 391 to calculate the change amount $\Delta B(x,u)$ of the interference function value. The dynamic model of the control target device 900 receives state information of the control target device 900 and a control command value and simulates an operation in a case where the control target device 900 is controlled in accordance with the control command value.

The dynamic model may output position information regarding a predicted position of the control target device 900 at a future time point. Alternatively, the dynamic model may output an operation amount of the control target device 900. In other words, the dynamic model may output a difference obtained by subtracting the current position from a future predicted position of the control target device 900.

The dynamic model is a model for obtaining a differential value or a difference of a state indicated by the state information x of the control target device 900 with respect to the input of the control command value u, and may be, for example, a state space model.

The interference function calculation unit 391 may calculate a predicted value of a position of the control target device 900 by inputting position information of the control target device 900 and the control command value u into the dynamic model. The interference function calculation unit 391 may calculate a predicted value of the interference function value on the basis of the predicted value of the position of the control target device 900. The interference function calculation unit 391 may calculate the amount of change in the interference function value by subtracting the current value from the predicted value of the interference function value.

The interference function calculation unit 391 may calculate the change amount $\Delta B(x,u)$ of the interference function value through calculation of the dynamic model. Alternatively, the interference function calculation unit 391 may calculate the approximate change amount $\Delta B(x,u)$ of the interference function value by using Expression (2).

[Math. 2]

$$\Delta B(x,\ u) \approx \frac{\partial B(x,\ u)}{\partial u}\Delta t \cdot u \qquad \cdots (2)$$

$\Delta t$ indicates a time interval between control steps. B(x,u) indicates the interference function value. In a case where the control command value u is changed, the operation of the control target device 900 changes and thus the interference function value changes. Therefore, the interference function B is represented as a function of the control command value u.

Alternatively, the interference function calculation unit 391 may appropriately use the method of calculating the change amount $\Delta B(x,u)$ of the interference function value through calculation of the dynamic model and the method of calculating the approximate change amount $\Delta B(x,u)$ of the interference function value by using Expression (2). For example, in a case where the change amount $\Delta B(x,u)$ of the interference function value can be calculated through calculation of the dynamic model, the interference function calculation unit 391 may calculate the change amount $\Delta B(x,u)$ of the interference function value through calculation of the dynamic model. On the other hand, in a case where the change amount $\Delta B(x,u)$ of the interference function value cannot be calculated through calculation of the dynamic model, the interference function calculation unit 391 may calculate the approximate change amount $\Delta B(x,u)$ of the interference function value by using Expression (2).

The device control unit 395 controls the control target device 900 by calculating a control command value for the control target device 900 and transmitting the calculated control command value to the control target device 900 via the second communication unit 310.

In the device control unit 395, the avoidance command value calculation unit 396 tries to calculate an avoidance command value. In a case where calculation of the avoidance command value is successful, the device control unit 395 transmits the obtained avoidance command value to the control target device 900 via the second communication unit 310. On the other hand, in a case where the avoidance command value cannot be obtained, the device control unit 395 transmits a control command value for decelerating the control target device 900 to the control target device 900 via the second communication unit 310.

The avoidance command value calculation unit 396 obtains the avoidance command value as described above. The avoidance command value is a control command value for the control target device 900, and is a control command value that satisfies constraint conditions including a sufficient condition for the control target device 900 not to come into contact with an obstacle, and an evaluation value obtained by applying the control command value to an evaluation function satisfies a predetermined end condition. The avoidance command value calculation unit 396 calculates the avoidance command value by solving an optimization problem using the constraint condition and the evaluation function. The sufficient condition for the control target device 900 not to come into contact with an obstacle corresponds to an example of a condition for the control target device 900 not to come into contact with the obstacle.

The control device 300 can control the control target device 900 not to come into contact with an obstacle by controlling the control target device 900 by using the avoidance command value.

The constraint conditions in the minimization problem solved by the avoidance command value calculation unit 396 are expressed by three types of formulae. Among the three types of formulae, the first type is expressed as in Expression (3).

[Math. 3]

$$\Delta B(x, u) + \gamma B(x) \geq 0 \qquad \cdots (3)$$

Here, $\gamma$ is a constant of $0 \leq \gamma < 1$.

According to the value of $\gamma$, it is possible to adjust an expected margin for the distance between the control target device 900 and an obstacle such that the control target device 900 and the obstacle do not come into contact with each other.

Normally, the control target device 900 is not in contact with an obstacle, and B(x) indicates the distance between the control target device 900 and the obstacle. When the control target device 900 approaches an obstacle and $\Delta B(x,u)$ takes a negative value, Expression (3) is valid in a case where the magnitude of $\Delta B(x,u)$ is equal to or less than $\gamma B(x)$.

From the above, it can be said that a part $(1-\gamma)B(x)$ of the distance between the control target device 900 and the obstacle denoted by B(x) is used as a margin for preventing the control target device 900 and the obstacle from coming into contact with each other and excluded from the operable range of the control target device 900.

When a larger value of $\gamma$ is set, the operable range of the control target device 900 is wider. On the other hand, when a smaller value of $\gamma$ is set, the margin for preventing the control target device 900 from coming into contact with the obstacle becomes larger. For example, even if the control target device 900 is pushed toward the obstacle by an unexpected external force, the control target device 900 is unlikely to hit the obstacle.

As expressed in Expression (3), the avoidance command value calculation unit 396 obtains the avoidance command value by using an interference function value and a value indicating a temporal change of the interference function value.

In a case where there are a plurality of obstacles, the constraint condition of Expression (3) may be provided for each obstacle. Consequently, the obstacle avoidance control device 400 can control to the control target device 900 not to come into contact with all of the obstacles. Alternatively, an interference function may be designed for an aggregate of a plurality of obstacles.

Expression (3) indicates a sufficient condition that, in a case where the control target device 900 does not come into contact with an obstacle in the current control step, the control target device 900 does not come into contact with an obstacle in the next control step either. This will be described.

The current control step is indicated by t, and the next control step of the control step t is indicated by t+1. An interference function value in the control step t is indicated by $B(x_t)$.

An interference function value in the control step t+1 is indicated by $B(x_{t+1})$. A difference obtained by subtracting $B(x_t)$ from $B(x_{t+1})$ is indicated by $\Delta B(x_t,u_t)$. $\Delta B(x_t,u_t)$ is expressed as in Expression (4).

[Math. 4]

$$\Delta B(x_t, u_t) = B(x_{t+1}) - B(x_t) \qquad \cdots (4)$$

Expression (5) is obtained from Expression (3).

[Math. 5]

$$\Delta B(x_t, u_t) \geq -\gamma B(x_t) \qquad \cdots (5)$$

Expression (6) is obtained from Expression (4) and Expression (5).

[Math. 6]

$$B(x_{t+1}) = B(x_t) + \Delta B(x_t, u_t)$$
$$\geq B(x_t) - \gamma B(x_t) \qquad \cdots (6)$$

Because $0 \leq \gamma < 1$, $B(x_t) - \gamma B(x_t) \geq 0$ and $B(x_{t+1}) > 0$ when $B(x_t) > 0$. Therefore, in a case where the control target device 900 is located outside an obstacle in the control step t, the control target device 900 is also located outside the obstacle in the control step t+1.

By solving the optimization problem such that Expression (3) is satisfied in all control steps, the control target device 900 can be controlled not to come into contact with an obstacle not only in the next control step but also in all subsequent control steps.

Among the three types of formulae expressing the constraint conditions in the minimization problem solved by the avoidance command value calculation unit 396, the second type is expressed as in Expression (7).

[Math. 7]

$$u_{i\_min} \leq u_i \leq u_{i\_max} \quad (i = 1, 2, \ldots, N) \qquad \cdots (7)$$

Here, $u_i$ (where i is an integer of $1 \leq i \leq N$) is a scalar value indicating a control command value for each movable portion of the control target device 900, such as each joint of the control target device 900. N indicates the number of movable portions of the control target device 900. In addition, i is an identification number for identifying a movable portion.

A movable portion identified by the identification number i is referred to as an i-th movable portion. Therefore, $u_i$ is a control command value for the i-th movable portion.

Further, $u_{i\_min}$ and $u_{i\_max}$ are respectively a lower limit value and an upper limit value of $u_i$ that are defined in advance depending on a specification of the control target device 900.

Expression (7) shows constraint conditions that each control command value is set within a range of the upper and lower limit values defined by a specification of a movable portion. The specification of the movable portion is defined by, for example, the specification of an actuator used for the movable portion.

The control command value u is a vector represented by arranging $u_i$ (where i = 1, 2,..., and N).

Among the three types of formulae expressing the constraint conditions in the minimization problem solved by the avoidance command value calculation unit 396, the third type is expressed as in Expression (8).

[Math. 8]

$$\Delta V(x, u) \leq d \qquad \cdots (8)$$

$\Delta V$ indicates an amount of change in a Lyapunov function value. A Lyapunov function V is obtained through machine learning performed by the machine learning unit 392. However, a control function used by the control device 300 is not limited to the Lyapunov function.

"d" is provided to easily obtain a solution by relaxing the constraint conditions.

In a case where a solution is obtained at d = 0, the solution is a control command value for strictly achieving an objective set for the control target device 900. On the other hand, in a case where d = 0, a solution is searched for in a pinpoint accuracy, and thus there is concern that a solution may not be obtained.

Therefore, $d \geq 0$ is set, and thus it is possible to widen a search range of a solution by allowing a deviation between an operation result of the control target device 900 based on a control command value and an objective. Hereinafter, the deviation between an operation result of the control target device 900 and the objective will be referred to as an error. As a value of "d" becomes greater, an allowable error increases, and thus a solution is easily obtained.

The evaluation function (also referred to as an objective function) in the optimization problem solved by the avoidance command value calculation unit 396 is expressed as in Expression (9).

[Math. 9]

$$u^* = \underset{u}{\text{argmin}}(u^T P u + p \cdot d^2) \qquad \cdots (9)$$

"u*" indicates a control command value serving as a solution to the optimization problem. "argmin" is a function that minimizes a value of an argument. In the case of Expression (3), "argmin" has, as a function value, the control command value u that minimizes the argument "$u^T P u + p \cdot d^2$".

The superscript "T" attached to the vector or the matrix denotes the transpose of the vector or matrix.

It is assumed that data formats of u* and u indicating a control command value are vectors having the same dimensions. It is assumed that the number of dimensions of the vectors is the same as the number of dimensions of a control command value transmitted from the control device 300 to the control target device 900.

"P" may be any positive-definite matrix having the same number of rows and columns as the number of dimensions of "u*". For example, in a case where a unit matrix is used as "P", the magnitude of the control command value can be made as small as possible such that the control target device 900 does not perform unnecessary operations.

The term "$p \cdot d^2$" in Expression (9) is a term for evaluating the magnitude of "d" in Expression (8). "p" of "$p \cdot d^2$" indicates a weight for adjusting weighting of "$u^T u$" and "$d^2$". "p" is set to, for example, a constant of p > 0.

In a case where two solution candidates to the optimization problem are detected, if values of the term "$u^T u$" of the two solution candidates are the same as each other, a solution candidate having a smaller value of the term "$p \cdot d^2$" is selected as a solution to the optimization.

Expression (9) corresponds to an example of the evaluation function. The control command value u serving as a minimum solution in Expression (9) corresponds to an example of a control command value at which an evaluation value obtained by applying the control command value to an evaluation function satisfies a prescribed end condition.

The machine learning unit 392 learns control for the control target device 900. Specifically, the parameter value update unit 393 performs machine learning of a control parameter value by updating a control parameter value on the basis of a reward value calculated by the reward value calculation unit 291. The stability determination unit 394 determines stability of the control by using the Lyapunov function, and the parameter value update unit 393 updates a parameter value such that the control is stabilized.

Here, the Lyapunov function V is expressed as in Expression (10) where W is a positive-definite diagonal matrix.

[Math. 10]

$$V = x^T W x \qquad \cdots (10)$$

A diagonal element of W corresponds to an example of a control parameter, and the machine learning unit 392 performs machine learning of a control parameter value that maximizes a reward value. The Lyapunov function is obtained by the machine learning unit 392 setting the control parameter value through the machine learning.

Here, the control command value u* is expressed as in Expression (11).

[Math. 11]

$$u^* = \pi(x, \theta) \qquad \cdots (11)$$

θ indicates a control parameter.

It may be said that ΔB(x,u) used for calculating u* in the above optimization calculation indicates a dynamic model of the control target device 900. From this, it may be said that the machine learning unit 392 is learning a policy π on a model basis.

As a method in which the parameter value update unit 393 searches for a control parameter value, an optimization-based method such as Bayesian optimization or a well-known method such as design of experiment may be used.

In the machine learning performed by the machine learning unit 392, a learning speed may be improved by using simulation of an operation of the control target device 900 together.

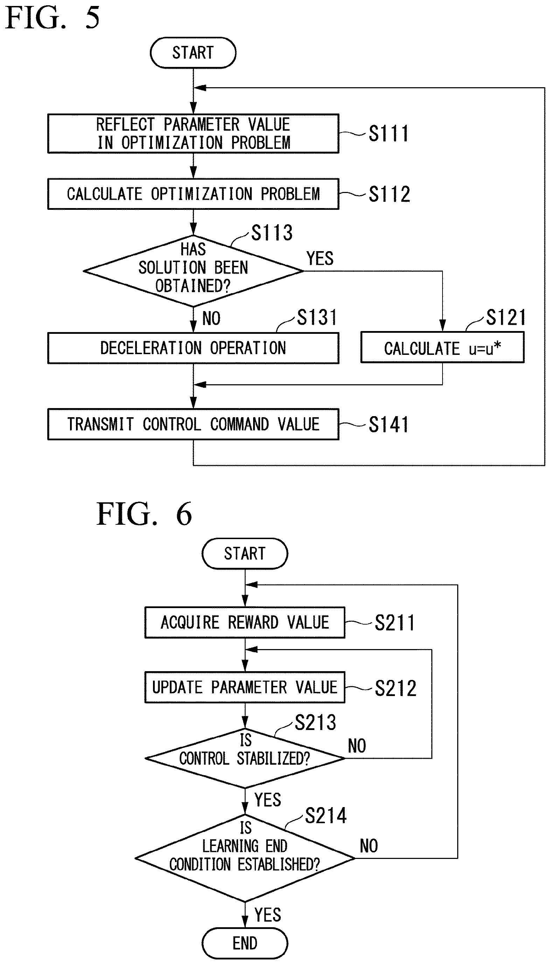

The control device 300 may update not only the control parameter values but also a control function such as the Lyapunov function during machine learning. For example, the control function storage unit 382 may store a plurality of Lyapunov functions having different structures in advance. In a case where control is not favorably performed (for example, in a case where the stability determination unit 394 determines in step S213 in FIG. 6 that control is not stable beyond a prescribed condition), the machine learning unit 392 may replace the Lyapunov function of Expression (10) with another Lyapunov function. Along with this, the avoidance command value calculation unit 396 also replaces the Lyapunov function of Expression (8) with the same Lyapunov function as the Lyapunov function of Expression (10).

As described above, the machine learning unit 392 and the avoidance command value calculation unit 396 switch and use control functions in common and use the control functions, and thus a result of machine learning performed by the machine learning unit 392 can be reflected not only in a control parameter value but also in a control function. Consequently, it is possible to improve control such as stabilizing control for the control target device 900 by the device control unit 395.

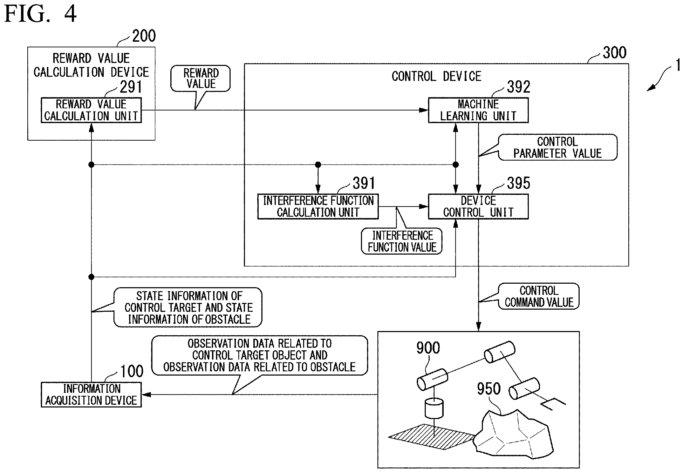

FIG. 4 is a diagram illustrating an example of a flow of data in the control system 1. In FIG. 4, an obstacle is given the reference numeral 950. The obstacle 950 is the same as the above-described obstacle.

The information acquisition device 100 acquires observation data related to the control target device 900, such as sensing data of the sensor of the control target device 900 and observation data related to the obstacle 950, such as a captured image of the obstacle 950.

The information acquisition device 100 generates state information of the control target device 900 on the basis of the observation data related to the control target device 900. Specifically, the information acquisition device 100 generates position information of the control target device 900 and information indicating an operation of the control target device 900. The information acquisition device 100 transmits the generated state information of the control target device 900 to the reward value calculation device 200 and the control device 300.

The information acquisition device 100 generates state information of the obstacle 950 on the basis of the observation data related to the obstacle 950. Specifically, the information acquisition device 100 generates position information of the obstacle 950. In a case where the obstacle 950 moves, the information acquisition device 100 generates information indicating an operation of the obstacle 950 in addition to the position information of the obstacle 950. The information acquisition device 100 transmits the generated state information of the obstacle 950 to the control device 300.

The reward value calculation unit 291 of the reward value calculation device 200 calculates a reward value on the basis of the state information of the control target device 900. The reward value calculation unit 291 transmits the calculated reward value to the control device 300 via the first communication unit 210.

The interference function calculation unit 391 of the control device 300 calculates the interference function value $B(x)$ on the basis of the state information of the control target device 900 and the state information of the obstacle 950.

Specifically, the interference function calculation unit 391 obtains an interference function on the basis of the state information of the obstacle 950, and stores the interference function into the second storage unit 380. The interference function calculation unit 391 calculates an interference function value by inputting the state information x of the control target device into the interference function.

The interference function calculation unit 391 calculates the change amount $\Delta B(x,u)$ of $B(x)$ between the control steps when the device control unit 395 solves the optimization problem in order to calculate a control command value. The interference function calculation unit 391 calculates the change amount $\Delta B(x,u)$ of the interference function value on the basis of the control command value u serving as a solution candidate to the optimization problem in addition to the state information of the control target device 900 and the state information of the obstacle 950.

In order for the interference function calculation unit 391 to calculate the change amount $\Delta B(x,u)$ of the interference function value, for example, the second storage unit 380 stores a dynamic model of the control target device 900. The interference function calculation unit 391 calculates a predicted value of the amount of change in the interference function value by using the dynamic model, and calculates the amount of change in the interference function value by calculating the difference with the current value of the amount of change in the interference function value.

The interference function calculation unit 391 outputs the interference function value $B(x)$ and the change amount $\Delta B(x,u)$ of the interference function value to the device control unit 395.

The machine learning unit 392 of the control device 300 calculates a control parameter value by performing machine learning on the basis of the state information of the control target device 900 and the reward value.

The device control unit 395 of the control device 300 solves an optimization problem in which the control parameter value calculated by the machine learning unit 392 is reflected, and thus calculates a control command value for the control target device 900. The device control unit 395 transmits the calculated control command value to the control target device 900 via the second communication unit 310.

With reference to FIGs. 5 and 6, an operation of the control device 300 will be described.

FIG. 5 is a flowchart illustrating an example of a processing procedure in which the control device 300 acquires a control command value for the control target device 900. The control device 300 executes the loop in FIG. 5 once in a single control step.

Through the process in FIG. 5, the avoidance command value calculation unit 396 reflects the control parameter value calculated by the machine learning unit 392 in the optimization problem (step S111). Specifically, the avoidance command value calculation unit 396 applies the Lyapunov function obtained from the above Expression (10) to the optimization problem.

Next, the avoidance command value calculation unit 396 performs calculation of the optimization problem (step S112). The avoidance command value calculation unit 396 determines whether or not a solution to the optimization problem has been obtained (step S113).

In a case where it is determined that a solution has been obtained (step S113: YES), the avoidance command value calculation unit 396 calculates u = u* (step S121). In other words, the avoidance command value calculation unit 396 determines a control command value obtained by solving the optimization problem as a control command value to be transmitted to the control target device 900.

The second communication unit 310 transmits the control command value to the control target device 900 (step S141).

After step S141, the process returns to step Sill.

In a case where it is determined that a solution has not been obtained in the determination in step S113 (step S113: NO), the avoidance command value calculation unit 396 generates a control command value for decelerating the control target device 900 as a control command value to be transmitted to the control target device 900.

After step S131, the process proceeds to step S14.

FIG. 6 is a diagram illustrating an example of a processing procedure in which the machine learning unit 392 performs machine learning of control for the control target device 900. The machine learning unit 392 executes a loop from step S211 to step S214 once in a single control step as a preprocess of the process in FIG. 5 performed by the avoidance command value calculation unit 396 until it is determined that an end condition for machine learning is established.

Through the process in FIG. 6, the machine learning unit 392 acquires the reward value calculated by the reward value calculation unit 291 (step S211).

The parameter value update unit 393 updates a control parameter value on the basis of the acquired reward value and the state information of the control target device 900 (step S212). As described above, a well-known method may be used as a method of searching for the control parameter value as a solution in step S212.

Next, the stability determination unit 394 determines whether or not control is stabilized at the parameter value obtained in step S212 (step S213). A well-known determination method may be used as a determination method in step S213.

In a case where the stability determination unit 394 determines that the control is not stabilized (step S213: NO), the process returns to step S212.

On the other hand, in a case where the stability determination unit 394 determines that the control is stabilized (step S213: YES), the machine learning unit 392 determines whether or not a prescribed learning end condition is established (step S214). The stability determination unit 394 compares, for example, the previous control parameter value with the current control parameter value, and sets a learning end condition that the magnitude of the amount of change in the control parameter value is equal to or less than a prescribed magnitude. The learning end condition in this case is expressed as in Expression (12).

[Math. 12]

$$\|\Delta\theta\| < \alpha \qquad \cdots (1\,2)$$

$\|\Delta\theta\|$ indicates a norm of the change amount $\Delta\theta$ of the control parameter value. The norm of the amount of change in the control parameter value corresponds to an example of the magnitude of the amount of change in the control parameter value.

$\alpha$ is a positive constant threshold value.

In a case where the machine learning unit 392 determines that the learning end condition is not established (step S214: NO), the process returns to step S211.

On the other hand, in a case where the machine learning unit 392 determines that the learning end condition is established (step S214: YES), the control device 300 finishes the process in FIG. 6.

As described above, the machine learning unit 392 performs machine learning of control for an operation of the control target device 900. The avoidance command value calculation unit 396 obtains an avoidance command value that is a control command value for the control target device 900 and is a control command value that satisfies constraints condition including a sufficient condition for the control target device 900 not to come into contact with an obstacle and at which an evaluation value obtained by applying the control command value to an evaluation function satisfies a prescribed end condition. The device control unit 395 controls the control target device 900 on the basis of the avoidance command value. A parameter value obtained through machine learning performed by the machine learning unit 392 is reflected in at least one of the evaluation function and the constraint condition.

The control device 300 obtains a control command value that satisfies constraint conditions including a condition for the control target device 900 not to come into contact with an obstacle, and can thus reflect a determination result of whether or not the control target device will come into contact with the obstacle in the control command value. According to the control device 300, in this respect, even in a case where the control target device and the obstacle are relatively close to each other, it can be expected that the influence of an operation of the control target device for avoiding contact with the obstacle will be made relatively small or eliminated.

In a case where control for the control target device 900 is learned, the machine learning unit 392 need not take into consideration contact between the control target device 900 and an obstacle. According to the control device 300, in this respect, it is expected that a load on the machine learning unit 392 searching for a solution is reduced, and the processing time for finding the solution is relatively short.

The avoidance command value calculation unit 396 uses the constraint condition including a condition for achieving an objective set for the control target device 900 and a condition in which a parameter value is reflected. Specifically, the avoidance command value calculation unit 396 uses the constraint condition including a control function in which a control parameter value is reflected.

In the control device 300, it is expected that the accuracy of achieving an objective is improved by updating a parameter value through machine learning, and it is expected that the control target device 900 coming into contact with an obstacle can be avoided due to a condition for the control target device 900 not to come into contact with the obstacle even in a stage in which the machine learning does not progress.

The control function storage unit 382 stores a plurality of control functions commonly used for acquisition of the parameter value by the machine learning unit 392 and acquisition of the avoidance command value by the avoidance command value calculation unit 396. The machine learning unit 392 and the avoidance command value calculation unit 396 commonly switch and use any of the control functions stored in the control function storage unit 382.

As described above, since the machine learning unit 392 and the avoidance command value calculation unit 396 commonly switch and use the control functions, a result of machine learning performed by the machine learning unit 392 can be reflected not only in a control parameter value but also in a control function. Consequently, it is possible to improve control such as stabilizing control for the control target device 900 by the device control unit 395.

<Second example embodiment>

In a second example embodiment, another example of an optimization problem used for a control device to calculate a control command value will be described.

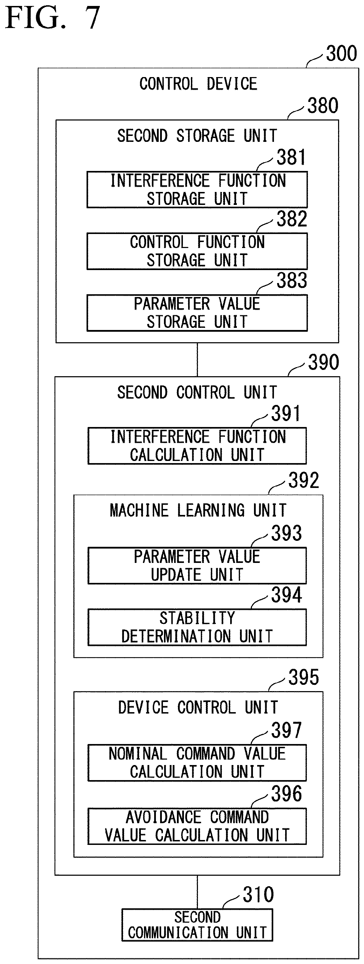

FIG. 7 is a schematic block diagram illustrating an example of a functional configuration of a control device 300 according to the second example embodiment. In the configuration illustrated in FIG. 7, the control device 300 includes a second communication unit 310, a second storage unit 380, and a second control unit 390. The second storage unit 380 includes an interference function storage unit 381, a control function storage unit 382, and a parameter value storage unit 383. The second control unit 390 includes an interference function calculation unit 391, a machine learning unit 392, and a device control unit 395. The machine learning unit 392 includes a parameter value update unit 393 and a stability determination unit 394. The device control unit 395 includes an avoidance command value calculation unit 396 and a nominal command value calculation unit 397.

In the control device 300 illustrated in FIG. 7, an optimization problem used by the avoidance command value calculation unit 396 is different from that in the case of the first example embodiment illustrated in FIG. 3. Along with this, in the control device 300 illustrated in FIG. 7, the device control unit 395 includes the nominal command value calculation unit 397, which is different from that in the case of the first example embodiment illustrated in FIG. 3. Remaining configurations of the control device 300 illustrated in FIG. 7 are the same as those in the case of the first example embodiment illustrated in FIG. 3.

A control system according to the second example embodiment is the same as that in the case of the first example embodiment except for the above description. Regarding the control system according to the second example embodiment, description of the same details as in the case of the first example embodiment will be omitted, and the reference numerals illustrated in FIG. 1 and the reference numerals illustrated in FIG. 2 will be cited as necessary.

The nominal command value calculation unit 397 calculates a nominal command value. The nominal command value is a control command value for the control target device 900 in a case where obstacle avoidance by the control target device 900 is not taken into consideration. In other words, the nominal command value is a control command value for the control target device 900, for achieving an objective set for the control target device 900 under the assumption that there is no obstacle.

A control method used for the nominal command value calculation unit 397 to calculate a nominal command value is not limited to a specific method, and various well-known control methods may be used.

The nominal command value calculated by the nominal command value calculation unit 397 is used as a control command value serving as a reference for the avoidance command value calculation unit 396 acquiring a control command value (that is, an actually used control command value) for which an instruction is given to the control target device 900.

A function for calculating the nominal command value corresponds to an example of a control function. The function for calculating the nominal command value will be referred to as a nominal function.

The nominal command value calculation unit 397 reflects a control parameter value calculated by the machine learning unit 392 in the nominal function, and calculates the nominal command value by using the nominal function after the reflection.

Constraint conditions in the optimization problem used for the avoidance command value calculation unit 396 to calculate a control command value are the same as in the case of the first example embodiment, and are expressed as in Expression (3), Expression (7), and Expression (8).

On the other hand, an evaluation function in the optimization problem used for the avoidance command value calculation unit 396 to calculate a control command value is expressed as in Expression (13) unlike in the case of the first example embodiment.

[Math. 13]

$$u^* = \underset{u}{\arg\min}\{(u - u_r)^T(u - u_r)\} \qquad \cdots (13)$$

In the same manner as in the case of the first example embodiment, "u*" indicates a control command value serving as a solution to the optimization problem. As described above, "argmin" is a function that minimizes a value of an argument. In the case of Expression (13), "argmin" has, as a function value, a value of u that minimizes the argument "$(u-u_r)^T(u-u_r)$".

"$u_r$" indicates a nominal command value from the nominal command value calculation unit 397.

Expression (13) indicates obtaining a control command value close to and serving as the nominal command value $u_r$. Since the nominal command value $u_r$ is a command value calculated to cause the control target device 900 to execute an objective set for the control target device 900, it is expected that the objective set for the control target device 900 can be executed by the control target device 900 by obtaining a command value close to the nominal command value $u_r$.

It is assumed that a data format of $u_r$ is a vector having the same dimensions as in the cause of u* and u described above. It is assumed that the number of dimensions of the vectors is the same as the number of dimensions of a control command value transmitted from the control device 300 to the control target device 900.

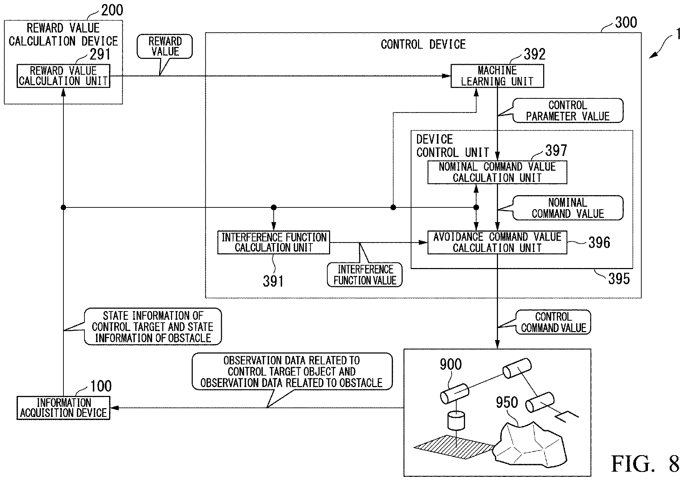

FIG. 8 is a diagram illustrating an example of a flow of data in the control system 1 according to the second example embodiment. The example illustrated in FIG. 8 is different from that in the case of FIG. 4 in that the avoidance command value calculation unit 396 of the device control unit 395 is explicitly illustrated and the device control unit 395 includes the nominal command value calculation unit 397. A control parameter value calculated by the machine learning unit 392 is input to the nominal command value calculation unit 397, and the nominal command value calculation unit 397 calculates a nominal command value by using a nominal function in which a control parameter value is reflected. The nominal command value calculation unit 397 outputs the calculated nominal command value to the avoidance command value calculation unit 396. The avoidance command value calculation unit 396 uses the nominal command value for an evaluation function in the optimization problem.

Remaining details in the example illustrated in FIG. 8 are the same as in the case of FIG. 4.

As described above, as an evaluation function in the optimization problem used to calculate a control command value, the avoidance command value calculation unit 396 uses an evaluation function with which a control command value having a smaller difference from a nominal command value obtained by using a parameter value calculated by the machine learning unit 392 is evaluated to be higher.

In the control device 300, it is expected that an objective set for the control target device 900 can be executed by the control target device 900 by using the evaluation function. In the control device 300, a parameter value is reflected in a nominal command value of the evaluation function, and thus a learning result in the machine learning unit 392 can be reflected in a control command value.

<Third example embodiment>

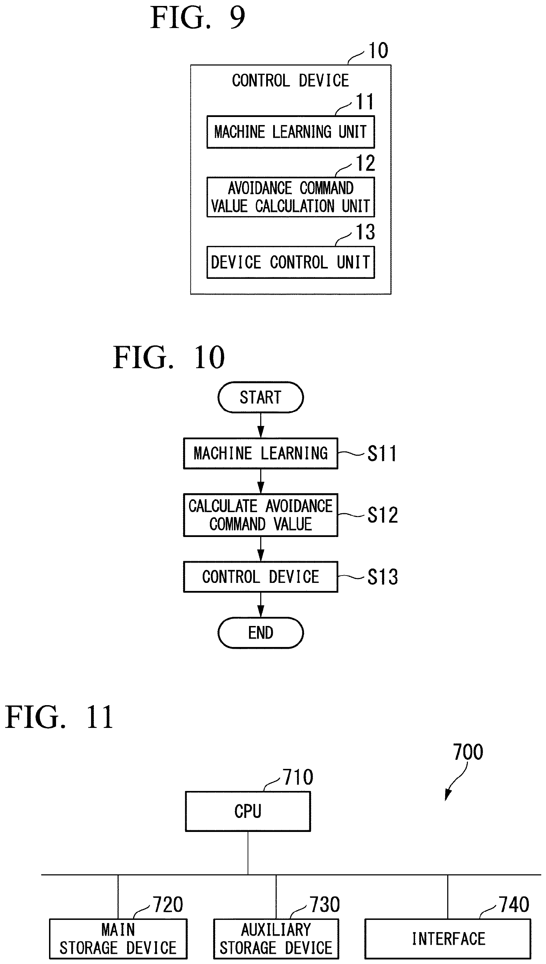

FIG. 9 is a diagram illustrating an example of a configuration of a control device according to a third example embodiment. A control device 10 illustrated in FIG. 9 includes a machine learning unit 11, an avoidance command value calculation unit 12, and a device control unit 13.

In such a configuration, the machine learning unit 11 performs machine learning of control for an operation of a control target device. The avoidance command value calculation unit 12 obtains an avoidance command value. The avoidance command value is a control command value for a control target device, and is a control command value that satisfies constraint conditions including a condition for the control target device not to come into contact with an obstacle and at which an evaluation value obtained by applying the control command value to an evaluation function satisfies a prescribed end condition. The device control unit 13 controls a control target device on the basis of the avoidance command value. A parameter value obtained through machine learning in the machine learning unit 11 is reflected in at least one of an evaluation function and a constraint condition.

The control device 10 obtains a control command value that satisfies constraint conditions including a condition for a control target device not to come into contact with an obstacle, and thus a determination result of whether or not the control target device will come into contact with the obstacle can be reflected in the control command value. According to the control device 10, in this respect, even in a case where the control target device and the obstacle are relatively close to each other, it can be expected that the influence of an operation of the control target device for avoiding contact with the obstacle will be made relatively small or eliminated.

In a case where control for a control target device is learned, the machine learning unit 11 need not take into consideration contact between the control target device and an obstacle. According to the control device 10, in this respect, it is expected that a load on the machine learning unit 11 searching for a solution is reduced and a processing time for finding the solution is relatively short.

<Fourth example embodiment>

FIG. 10 is a diagram illustrating an example of a processing procedure in a control method according to a fourth example embodiment. In the control method illustrated in FIG. 10, machine learning of control for an operation of a control target device is learned (step S11), an avoidance command value that is a control command value for a control target device, the control command value which satisfies constraint conditions including a condition for the control target device not to come into contact with an obstacle, and the control command value that an evaluation value obtained by applying the control command value to an evaluation function satisfies a prescribed end condition is obtained (step S12), and the control target device is controlled on the basis of the avoidance command value (step S13). A parameter value obtained through the machine learning in step S11 is reflected in at least one of the evaluation function and the constraint condition.

In the control method, a control command value that satisfies constraint conditions including a condition for a control target device not to come into contact with an obstacle is obtained, and thus a determination result of whether or not the control target device will come into contact with the obstacle can be reflected in the control command value. In the control method, in this respect, even in a case where the control target device and the obstacle are relatively close to each other, it can be expected that the influence of an operation of the control target device for avoiding contact with the obstacle will be made relatively small or eliminated.

In step S11, in a case where control for a control target device is learned, the machine learning unit need not take into consideration contact between the control target device and an obstacle. According to the control method, in this respect, it is expected that a load of searching for a solution in step S11 is reduced and a processing time for finding the solution is relatively short.

FIG. 11 is a schematic block diagram illustrating a configuration of a computer according to at least one of the example embodiments.

In the configuration illustrated in FIG. 20, a computer 700 includes a CPU 710, a main storage device 720, an auxiliary storage device 730, and an interface 740.

One or more of the information acquisition device 100, the reward value calculation device 200, and the control device 300 may be installed in the computer 700. In this case, the above-described operation of each processing unit is stored in the auxiliary storage device 730 in a program format. The CPU 710 reads a program from the auxiliary storage device 730, loads the program to the main storage device 720, and executes the above-described process according to the program. The CPU 710 secures a storage region corresponding to each of the above-described storage units in the main storage device 720 according to the program. The interface 740 has a communication function, and performs communication under the control of the CPU 710 such that communication between each device and another device is executed.

In a case where the reward value calculation device 200 is installed in the computer 700, the first control unit 290 and the operation of each constituent thereof are stored in the auxiliary storage device 730 in a program format. The CPU 710 reads a program from the auxiliary storage device 730, loads the program to the main storage device 720, and executes the above-described process according to the program.

The CPU 710 secures a storage region corresponding to the first storage unit 280 in the main storage device 720 according to the program. The interface 740 has a communication function, and performs communication under the control of the CPU 710 such that communication performed by the first communication unit 210 is executed.

In a case where the control device 300 is installed in the computer 700, the second control unit 390 and the operation of each constituent thereof are stored in the auxiliary storage device 730 in a program format. The CPU 710 reads a program from the auxiliary storage device 730, loads the program to the main storage device 720, and executes the above-described process according to the program.

The CPU 710 secures storage regions corresponding to the second storage unit 380 and each constituent thereof in the main storage device 720 according to the program. The interface 740 has a communication function, and communication performed by the second communication unit 310 is executed by performing communication under the control of the CPU 710.

A program for realizing all or some of the functions of the information acquisition device 100, the reward value calculation device 200, and the control device 300 may be recorded on a computer readable recording medium, and the program recorded on the recording medium may be read into a computer system and executed such that the process of each unit is performed. The "computer system" mentioned here includes an operating system (OS) or hardware such as peripheral devices.

The "computer readable recording medium" includes portable medium such as a flexible disk, a magnetooptical disk, a read only memory (ROM), and a compact disc read only memory (CD-ROM), and a storage device such as a hard disk built into a computer system. The program may realize some of the functions, and may further realize the functions through combination with a program already recorded in the computer system.

As described above, the example embodiments of the present invention have been described with reference to the drawings, but a specific configuration is not limited to the example embodiments and includes design changes and the like within the scope without departing from the spirit of the present invention.

INDUSTRIAL APPLICABILITY

The example embodiments of the present invention may be applied to a control device, a control method, and a recording medium.

Reference Symbols

| | |
|---|---|
| 1 | Control system |
| 10, 300 | Control device |
| 11, 392 | Machine learning unit |
| 12, 396 | Avoidance command value calculation unit |
| 13, 395 | Device control unit |
| 100 | Information acquisition device |
| 200 | Reward value calculation device |
| 210 | First communication unit |
| 280 | First storage unit |
| 281 | Reward function storage unit |
| 290 | First control unit |
| 291 | Reward value calculation unit |
| 310 | Second communication unit |
| 380 | Second storage unit |
| 381 | Interference function storage unit |
| 382 | Control function storage unit |
| 383 | Parameter value storage unit |
| 390 | Second control unit |
| 391 | Interference function calculation unit |
| 393 | Parameter value update unit |
| 394 | Stability determination unit |
| 397 | Nominal command value calculation unit |

**Claims**

1. A control device comprising:

a machine learning unit that performs machine learning of control for an operation of a control target device;
an avoidance command value calculation unit that obtains an avoidance command value that is a control command value for the control target device, the control command value which satisfies constraint conditions including a condition for the control target device not to come into contact with an obstacle, and the control command value that an evaluation value obtained by applying the control command value to an evaluation function satisfies a prescribed end condition; and
a device control unit that controls the control target device on the basis of the avoidance command value,

wherein a parameter value obtained through the machine learning in the machine learning unit is reflected in at least one of the evaluation function and the constraint condition.

2. The control device according to claim 1, further comprising:

a control function storage unit that stores a plurality of control functions commonly used for acquisition of the parameter value by the machine learning unit and acquisition of the avoidance command value by the avoidance command value calculation unit,
wherein the machine learning unit and the avoidance command value calculation unit commonly switch and use any of the control functions stored in the control function storage unit.

3. The control device according to claim 1 or 2,
wherein the avoidance command value calculation unit uses the constraint condition including a condition for achieving an objective set for the control target device, the condition being a condition in which the parameter value is reflected.

4. The control device according to claim 1,
wherein the machine learning unit acquires, through the machine learning, a parameter value of a control function for obtaining a nominal command value included in the evaluation function used by the avoidance command value calculation unit.

5. A control method comprising:

a step of performing machine learning of control for an operation of a control target device;
a step of obtaining an avoidance command value that is a control command value for the control target device, the control command value which satisfies constraint conditions including a sufficient condition for the control target device not to come into contact with an obstacle, and the control command value that an evaluation value obtained by applying the control command value to an evaluation function satisfies a prescribed end condition; and
a step of controlling the control target device on the basis of the avoidance command value,
wherein a parameter value obtained through the machine learning in the step of performing machine learning is reflected in at least one of the evaluation function and the constraint condition.

6. A recording medium recording a program causing a computer to execute:

a step of performing machine learning of control for an operation of a control target device;
a step of obtaining an avoidance command value that is a control command value for the control target device, the control command value which satisfies constraint conditions including a sufficient condition for the control target device not to come into contact with an obstacle, and the control command value that an evaluation value obtained by applying the control command value to an evaluation function satisfies a prescribed end condition; and
a step of controlling the control target device on the basis of the avoidance command value,
wherein a parameter value obtained through the machine learning in the step of performing machine learning is reflected in at least one of the evaluation function and the constraint condition.

# FIG. 1

```
        ┌──── 200
   ┌─────────────────┐
   │  REWARD VALUE   │
   │CALCULATION DEVICE│                              ┌── 1
   └─────────────────┘                            ╱
         │                    ┌──── 300          ╱
         │              ┌──────────────┐
         ●──────────────│ CONTROL DEVICE│
         │              └──────────────┘
         │    ┌──── 100          │    ┌──── 900
   ┌──────────────┐      ┌──────────────┐
   │  INFORMATION │      │CONTROL TARGET│
   │ACQUISITION   │──────│   DEVICE     │
   │    DEVICE    │      └──────────────┘
   └──────────────┘
```

# FIG. 2

```
                        ┌──── 200
   ┌───────────────────────────┐
   │ REWARD VALUE CALCULATION  │
   │          DEVICE           │
   │                 ┌──── 280 │
   │  ┌─────────────────────┐  │
   │  │  FIRST STORAGE UNIT │  │
   │  │          ┌──── 281  │  │
   │  │  ┌───────────────┐  │  │
   │  │  │REWARD FUNCTION│  │  │
   │  │  │ STORAGE UNIT  │  │  │
   │  │  └───────────────┘  │  │
   │  └─────────────────────┘  │
   │            │              │
   │                 ┌──── 290 │
   │  ┌─────────────────────┐  │
   │  │  FIRST CONTROL UNIT │  │
   │  │          ┌──── 291  │  │
   │  │  ┌───────────────┐  │  │
   │  │  │ REWARD VALUE  │  │  │
   │  │  │CALCULATION UNIT│ │  │
   │  │  └───────────────┘  │  │
   │  └─────────────────────┘  │
   │            │              │
   │                 ┌──── 210 │
   │  ┌─────────────────────┐  │
   │  │       FIRST         │  │
   │  │ COMMUNICATION UNIT  │  │
   │  └─────────────────────┘  │
   └───────────────────────────┘
```

# FIG. 3

CONTROL DEVICE — 300

SECOND STORAGE UNIT — 380

INTERFERENCE FUNCTION STORAGE UNIT — 381

CONTROL FUNCTION STORAGE UNIT — 382

PARAMETER VALUE STORAGE UNIT — 383

SECOND CONTROL UNIT — 390

INTERFERENCE FUNCTION CALCULATION UNIT — 391

MACHINE LEARNING UNIT — 392

PARAMETER VALUE UPDATE UNIT — 393

STABILITY DETERMINATION UNIT — 394

DEVICE CONTROL UNIT — 395

AVOIDANCE COMMAND VALUE CALCULATION UNIT — 396

SECOND COMMUNICATION UNIT — 310

FIG. 4

# FIG. 5

```
        ┌─────────┐
        │  START  │
        └────┬────┘
             ↓
┌──────────────────────────────┐
│   REFLECT PARAMETER VALUE     │─── S111
│   IN OPTIMIZATION PROBLEM     │
└──────────────┬───────────────┘
               ↓
┌──────────────────────────────┐
│  CALCULATE OPTIMIZATION       │─── S112
│          PROBLEM              │
└──────────────┬───────────────┘
               ↓         S113
        ╱──────────────╲
       ╱      HAS        ╲  YES
      ◁  SOLUTION BEEN    ▷────────────┐
       ╲   OBTAINED?     ╱             │
        ╲──────┬────────╱              │
          NO   │         S131          ↓        S121
┌──────────────┴───────────────┐   ┌──────────────────┐
│   DECELERATION OPERATION      │   │  CALCULATE u=u*  │
└──────────────┬───────────────┘   └────────┬─────────┘
               ↓←──────────────────────────── 
┌──────────────────────────────┐
│  TRANSMIT CONTROL COMMAND     │─── S141
│          VALUE                │
└──────────────────────────────┘
```

# FIG. 6

```
        ┌─────────┐
        │  START  │
        └────┬────┘
             ↓
┌──────────────────────────────┐
│    ACQUIRE REWARD VALUE       │─── S211
└──────────────┬───────────────┘
               ↓
┌──────────────────────────────┐
│    UPDATE PARAMETER VALUE     │─── S212
└──────────────┬───────────────┘
               ↓         S213
        ╱──────────────╲
       ╱      IS         ╲  NO
      ◁  CONTROL          ▷────────────┐
       ╲  STABILIZED?    ╱             │
        ╲──────┬────────╱              │
          YES  │         S214          │
        ╱──────────────╲               │
       ╱      IS         ╲  NO         │
      ◁  LEARNING END     ▷────────────┘
       ╲ CONDITION        ╱
       ╲ ESTABLISHED?    ╱
        ╲──────┬────────╱
          YES  │
             ↓
        ┌─────────┐
        │   END   │
        └─────────┘
```

## FIG. 7

```
┌─────────────────────────────────────────┐ ⟋300
│              CONTROL DEVICE              │
│                                    ⟋380  │
│  ┌───────────────────────────────────┐  │
│  │        SECOND STORAGE UNIT        │  │
│  │                           ⟋381    │  │
│  │  ┌─────────────────────────────┐  │  │
│  │  │   INTERFERENCE FUNCTION     │  │  │
│  │  │       STORAGE UNIT          │  │  │
│  │  └─────────────────────────────┘  │  │
│  │                           ⟋382    │  │
│  │  ┌─────────────────────────────┐  │  │
│  │  │     CONTROL FUNCTION        │  │  │
│  │  │       STORAGE UNIT          │  │  │
│  │  └─────────────────────────────┘  │  │
│  │                           ⟋383    │  │
│  │  ┌─────────────────────────────┐  │  │
│  │  │     PARAMETER VALUE         │  │  │
│  │  │       STORAGE UNIT          │  │  │
│  │  └─────────────────────────────┘  │  │
│  └───────────────────────────────────┘  │
│                                    ⟋390  │
│  ┌───────────────────────────────────┐  │
│  │        SECOND CONTROL UNIT        │  │
│  │                           ⟋391    │  │
│  │  ┌─────────────────────────────┐  │  │
│  │  │   INTERFERENCE FUNCTION     │  │  │
│  │  │     CALCULATION UNIT        │  │  │
│  │  └─────────────────────────────┘  │  │
│  │                           ⟋392    │  │
│  │  ┌─────────────────────────────┐  │  │
│  │  │    MACHINE LEARNING UNIT    │  │  │
│  │  │                     ⟋393    │  │  │
│  │  │  ┌───────────────────────┐  │  │  │
│  │  │  │   PARAMETER VALUE     │  │  │  │
│  │  │  │     UPDATE UNIT       │  │  │  │
│  │  │  └───────────────────────┘  │  │  │
│  │  │                     ⟋394    │  │  │
│  │  │  ┌───────────────────────┐  │  │  │
│  │  │  │      STABILITY        │  │  │  │
│  │  │  │  DETERMINATION UNIT   │  │  │  │
│  │  │  └───────────────────────┘  │  │  │
│  │  └─────────────────────────────┘  │  │
│  │                           ⟋395    │  │
│  │  ┌─────────────────────────────┐  │  │
│  │  │     DEVICE CONTROL UNIT     │  │  │
│  │  │                     ⟋397    │  │  │
│  │  │  ┌───────────────────────┐  │  │  │
│  │  │  │ NOMINAL COMMAND VALUE │  │  │  │
│  │  │  │   CALCULATION UNIT    │  │  │  │
│  │  │  └───────────────────────┘  │  │  │
│  │  │                     ⟋396    │  │  │
│  │  │  ┌───────────────────────┐  │  │  │
│  │  │  │   AVOIDANCE COMMAND   │  │  │  │
│  │  │  │ VALUE CALCULATION UNIT│  │  │  │
│  │  │  └───────────────────────┘  │  │  │
│  │  └─────────────────────────────┘  │  │
│  └───────────────────────────────────┘  │
│                                    ⟋310  │
│         ┌─────────────────────┐          │
│         │       SECOND        │          │
│         │ COMMUNICATION UNIT  │          │
│         └─────────────────────┘          │
└─────────────────────────────────────────┘
```

FIG. 8

# FIG. 9

CONTROL DEVICE /10

MACHINE LEARNING UNIT /11

AVOIDANCE COMMAND VALUE CALCULATION UNIT /12

DEVICE CONTROL UNIT /13

# FIG. 10

START

MACHINE LEARNING —S11

CALCULATE AVOIDANCE COMMAND VALUE —S12

CONTROL DEVICE —S13

END

# FIG. 11

700

CPU /710

MAIN STORAGE DEVICE /720

AUXILIARY STORAGE DEVICE /730

INTERFACE /740

## INTERNATIONAL SEARCH REPORT

| | International application No. |
|---|---|
| | PCT/JP2019/003188 |

### A. CLASSIFICATION OF SUBJECT MATTER
Int. Cl. G05D1/02(2006.01)i, G05B13/02(2006.01)i, G05B19/4155(2006.01)i,
B25J9/10(2006.01)i, B25J13/00(2006.01)i

According to International Patent Classification (IPC) or to both national classification and IPC

### B. FIELDS SEARCHED

Minimum documentation searched (classification system followed by classification symbols)
Int. Cl. G05D1/00-3/20, G05B13/00-13/04, 19/4155-19/416, B25J9/10-9/22,
13/00

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2018-190241 A (OMRON CORP.) 29 November 2018, paragraphs [0023]-[0059], [0091]-[0108], fig. 1-4, 14-17 & US 2018/0330200 A1, paragraphs [0044]-[0081], [0113]-[0130], fig. 1-4, 14-17 & EP 3401847 A1 & CN 108873768 A | 1, 3-6<br>2 |
| A | JP 2012-208789 A (ADVANCED TELECOMMUNICATIONS RESEARCH INSTITUTE INTERNATIONAL) 25 October 2012, abstract & US 2012/0253514 A1, abstract | 1, 5-6 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>23.04.2019 | Date of mailing of the international search report<br>14.05.2019 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**EP 3 920 000 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012208789 A